# FASCICULE DE BREVET EUROPEEN

(11) **EP 3 259 149 B1**
(45) Date de publication et mention de la délivrance du brevet: **03.10.2018**
(21) Numéro de dépôt: 16705040.0
(22) Date de dépôt: 26.01.2016
(51) Int. Cl.: B60K 26/04

(54) **KART À LIMITEUR DE PUISSANCE AMÉLIORÉ, ET DISPOSITIF CORRESPONDANT**
KART MIT VERBESSERTEM LEISTUNGSBEGRENZER, UND ZUGEHÖRIGE VORRICHTUNG
KART WITH IMPROVED POWER LIMITER, AND ASSOCIATED DEVICE

(30) Priorité: 17.02.2015 FR 1551328
(43) Date de publication de la demande: 27.12.2017
(73) Titulaire: Sodikart, 44220 Couëron (FR)
(72) Inventeur: PAUVERT, Alexis, 44119 Grandchamp Des Fontaines (FR); MERIAN, Alain, 44450 La Chapelle Basse Mer (FR)
(74) Mandataire: Vidon Brevets & Stratégie
(86) Numéro de dépôt international: PCT/EP2016/051607
(87) Numéro de publication internationale: WO 2016/131614

(56) Documents cités:
- EP-A1- 0 589 666
- CA-A1- 2 222 490
- FR-A1- 2 533 512
- US-A- 2 661 941

## Description

### 1. Domaine technique de l'invention

L'invention se rapporte au domaine des véhicules de loisir destinés à être utilisés sur une piste, et plus particulièrement des karts. Plus précisément, l'invention concerne le réglage, et notamment la limitation, de la puissance délivrée par le moteur de tels karts.

### 2. Arrière-plan technologique

Les karts, et en particulier les karts de loisir, sont voués à être pilotés par des conducteurs de niveaux différents, allant de débutant à expérimenté. Par ailleurs, ces karts sont destinés à un public relativement large pouvant comprendre des adultes et des enfants.

Pour les pilotes jeunes et/ou inexpérimentés, il est souvent préférable de limiter la puissance maximale du kart, afin d'assurer la sécurité à la fois du pilote et des autres pilotes sur la piste.

Les gestionnaires de pistes proposent parfois plusieurs types de karts, plus ou moins puissants, adaptés à différentes situations. Cependant, ceci suppose de disposer de plusieurs flottes de karts, ce qui est coûteux (à l'achat, pour le stockage et pour l'entretien), et la mise en oeuvre reste complexe : un changement de catégorie suppose de changer de flotte de karts, ce qui prend du temps, et introduit en conséquence des pertes de temps de location.

Il a donc été envisagé plusieurs solutions pour ralentir les karts en fonction des besoins, sans qu'il soit nécessaire d'en changer. Une technique classique est celle de la « boîte à plombs », consistant à lester plus ou moins le kart en fonction des besoins. Cette approche reste cependant peu pratique, ne serait-ce que pour manipuler, déplacer et stocker les poids nécessaires. A nouveau, ces manipulations introduisent des pertes de temps.

D'autres solutions connues consistent à agir directement sur le moteur, notamment en limitant de façon contrôlée, en fonction des besoins, l'admission du carburant et/ou du comburant, par exemple en agissant sur l'ouverture maximale du papillon, ou volet, d'accélérateur.

Ainsi, au-delà d'une limite prédéfinie, et préférentiellement réglable entre plusieurs positions à l'aide d'une butée mobile, la puissance du moteur est bridée (le volet d'accélérateur ne s'ouvre pas plus que la limite prédéfinie), même si le pilote continue à accélérer.

Cette approche est techniquement simple, et efficace en ce qui concerne l'objectif de limitation de la puissance disponible.

En revanche, le pilotage peut devenir peu agréable, et l'accélérateur être difficile à contrôler. En effet, dans les positions bridées, et bien que la limite soit atteinte, en termes de puissance disponible (définie par la position de la butée), il est possible de continuer à accélérer (en « écrasant » l'accélérateur), ou plus exactement d'avoir le sentiment d'accélérer, sans effet sur le moteur. Inversement, le relâchement de l'accélérateur est sans effet, dans un premier temps.

En d'autres termes, après la mise en butée de la commande de gaz, le pilote peut être tenté d'appuyer plus fortement sur la pédale d'accélération, générant ainsi une forte traction sur le câble d'accélérateur. Les éléments de commande en aval du câble d'accélérateur pouvant être relativement fragiles, un ressort est généralement placé en série sur le câble d'accélérateur afin d'encaisser les efforts générés par une éventuelle force de traction excessive.

Une fois la commande de gaz arrivée en butée, le pilote peut donc continuer d'appuyer sur la pédale ou la manette d'accélération, grâce à la compression du ressort monté en série avec le câble d'accélérateur, sans que ceci n'ait d'effet sur la position du volet d'accélérateur. Lors du ralentissement, le pilote diminue la force d'appui afin de permettre le retour de la pédale ou de la manette. Cependant, le début du retour de pédale permet essentiellement de détendre le ressort, et n'a pas d'incidence sur la position du volet d'accélérateur et donc sur le comportement du kart. Ainsi, le kart ne décélère pas dès le début du retour de pédale. Le pilote a donc la sensation d'un véhicule qui « reste accéléré » malgré le mouvement retour de la pédale. Le moteur ne commence à ralentir que lorsque le volet d'accélérateur entame son retour vers son état initial, soit après la détente complète du ressort.

Un tel comportement du système de limitation de puissance est gênant et perturbant pour un pilote, en particulier pour un pilote inexpérimenté. Ceci peut nuire non seulement au plaisir et à l'apprentissage du pilote, mais également à sa sécurité et celle des autres pilotes sur la piste.

Un véhicule à moteur thermique comportant un arrangement selon le préambule de la revendication 1 et un dispositif de bridage selon le préambule de la revendication 14 sont connus du document CA 2 222 490 A1.

Il existe donc un besoin d'une technique ne présentant au moins certains de ces inconvénients de l'art antérieur.

Notamment, il existe un besoin d'une technique permettant d'optimiser le comportement du kart, lorsqu'un bridage est mis en oeuvre en agissant sur le volet d'accélérateur.

### 3. Exposé de l'invention

Ces objectifs, ainsi que d'autres qui apparaîtront par la suite, sont atteints à l'aide d'un kart à moteur thermique, mettant en oeuvre un volet d'accélérateur dont l'ouverture est pilotée par le déplacement d'un actionneur, via un câble d'accélérateur, ledit kart comprenant des moyens de bridage, contrôlant une ouverture maximale dudit volet d'accélérateur en fonction d'un réglage sélectionné, de façon à contrôler la puissance maximale disponible dudit moteur.

Selon l'invention, lesdits moyens de bridage contrôlent simultanément la tension dudit câble d'accélérateur, de façon que ladite tension soit réduite lorsque ladite ouverture maximale du volet est réduite, et réciproquement.

Ainsi, le bridage n'agit plus uniquement sur l'ouverture du volet, mais simultanément sur la tension du câble. Ce bridage permet de limiter l'ouverture maximale du volet, et donc de limiter la puissance maximale du moteur, tout en adaptant la tension du câble, notamment pour éviter que le début du relâchement de l'accélérateur soit sans effet.

Selon un mode de réalisation particulier, ledit câble d'accélérateur circule, sur une portion de sa longueur, dans une gaine, et en ce que lesdits moyens de bridage agissent sur la position de l'une des extrémités de ladite gaine.

Cette approche permet un contrôle simple et efficace de la tension du câble d'accélérateur.

Lesdits moyens de bridage peuvent notamment comprendre un boîtier recevant ledit câble d'accélérateur et présentant un élément de réglage, pouvant prendre au moins deux positions correspondant chacune à un niveau de bridage prédéfini.

Dans ce cas, ledit boîtier peut contenir, mobile en translation, un support de câble, relié à une extrémité dudit câble d'accélérateur et portant un élément d'actionnement dudit volet d'accélérateur.

Ce boîtier peut notamment contenir une butée mobile en translation, portant un logement de réception de ladite extrémité de ladite gaine.

En déplaçant l'extrémité de la gaine, cette butée permet de contrôler la tension du câble.

Dans un mode de réalisation particulier, ladite butée reçoit en appui ledit élément d'actionnement du volet d'accélérateur.

Selon un autre aspect particulier, ledit câble d'accélérateur peut porter un ressort de rappel du câble, monté entre ledit support de câble et ladite butée, ledit élément d'actionnement portant un ressort de rappel de la commande du volet.

Selon un mode de réalisation particulier, ledit élément de réglage est mobile en rotation.

Dans ce cas, ledit élément de réglage peut par exemple porter une rainure coopérant avec un ergot formé de ladite butée.

Ladite rainure peut notamment définir une spirale, ce qui permet d'effectuer un réglage fin et efficace, avec plusieurs tours de molette.

Le fond de ladite rainure peut porter au moins deux creux de maintien dudit ergot, chacun desdits creux correspondant à l'un des niveaux de bridage prédéfinis.

Il est ainsi aisé de régler le bridage, dans des conditions prédéfinies.

Selon une approche particulière, le réglage desdits moyens de bridage peut être actionné par un moteur.

Dans ce cas notamment, le kart peut comprendre des moyens de réception d'au moins un signal de commande, pilotant à distance ledit moteur, et/ou d'émission d'un signal d'information, indiquant la position des moyens de bridage.

L'invention concerne également un dispositif de bridage pour kart à moteur thermique mettant en oeuvre un volet d'accélérateur dont l'ouverture est pilotée par le déplacement d'un actionneur, via un câble d'accélérateur, comprenant des moyens de bridage contrôlant une ouverture maximale dudit volet d'accélérateur en fonction d'un réglage sélectionné, de façon à contrôler la puissance maximale disponible dudit moteur. Selon l'invention, lesdits moyens de bridage contrôlent simultanément la tension dudit câble d'accélérateur, de façon que ladite tension soit réduite lorsque ladite ouverture maximale du volet est réduite, et réciproquement.

### 4. Liste des figures

D'autres buts, caractéristiques et avantages de l'invention apparaîtront à la lecture de la description suivante donnée à titre uniquement non limitatif et qui se réfère aux figures annexées, dans lesquelles :
- la figure 1 illustre schématiquement un système mettant en oeuvre l'invention ;
- la figure 2 illustre un mode de réalisation du dispositif de bridage de la figure 1 ;
- la figure 3 représente le dispositif de la figure 2, le boîtier ayant été rendu transparent ;
- la figure 4 est une première vue en éclaté du dispositif de bridage de la figure 2 ;
- la figure 5 est une seconde vue en éclaté du dispositif de bridage de la figure 2.

### 5. Description détaillée de modes de réalisation de l'invention

L'invention concerne une amélioration des dispositifs de bridage pour kart, et les karts correspondants. Un dispositif de bridage selon l'invention assure une double fonction, simultanément :
- la limitation de l'ouverture du volet d'accélérateur ; et
- la tension du câble de l'accélérateur.

Selon l'invention, un bridage est proposé, qui permet de limiter l'ouverture maximale du volet, et donc de limiter la puissance maximale du moteur. Dans le même temps, la tension du câble est adaptée, pour éviter que le début du relâchement de l'accélérateur soit sans effet.

Ainsi, le dispositif peut être réglé de façon que, dans une position non bridée (position de puissance maximale), le câble d'accélérateur soit tendu de façon efficace, permettant de disposer d'une plage maximum d'action de la pédale d'accélérateur. Il est ensuite possible de modifier le bridage, en limitant l'ouverture maximale du volet. Le moteur a alors une puissance maximale limitée. Dans le même temps, le câble d'accélérateur est légèrement détendu, ce qui permet d'éviter l'absence d'effet lorsque le pilote commence à relâcher la pédale d'accélérateur.

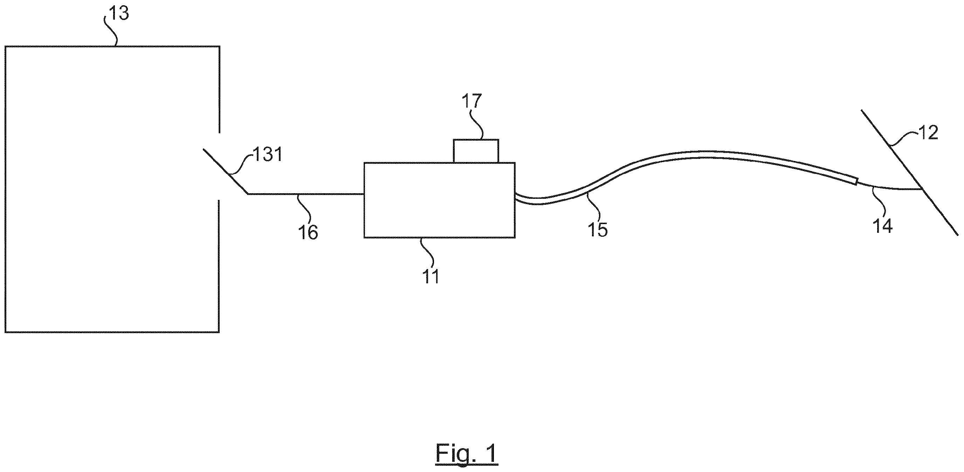

Comme illustré schématiquement sur la figure 1, le dispositif de bridage 11 relie une pédale d'accélérateur 12 (ou plus généralement un actionneur, par exemple une manette actionnable à la main) au papillon 131 d'un moteur thermique 13. La pédale 12 est reliée au dispositif 11 par un câble d'accélérateur 14, monté dans une gaine 15.

Un élément d'actionnement, ou de commande de gaz, 16, par exemple une tige articulée par rapport au dispositif, relie ce dernier au papillon 131.

Le dispositif 11 porte un élément de réglage du bridage 17, se présentant par exemple sous la forme d'un bouton, ou molette, mobile en rotation.

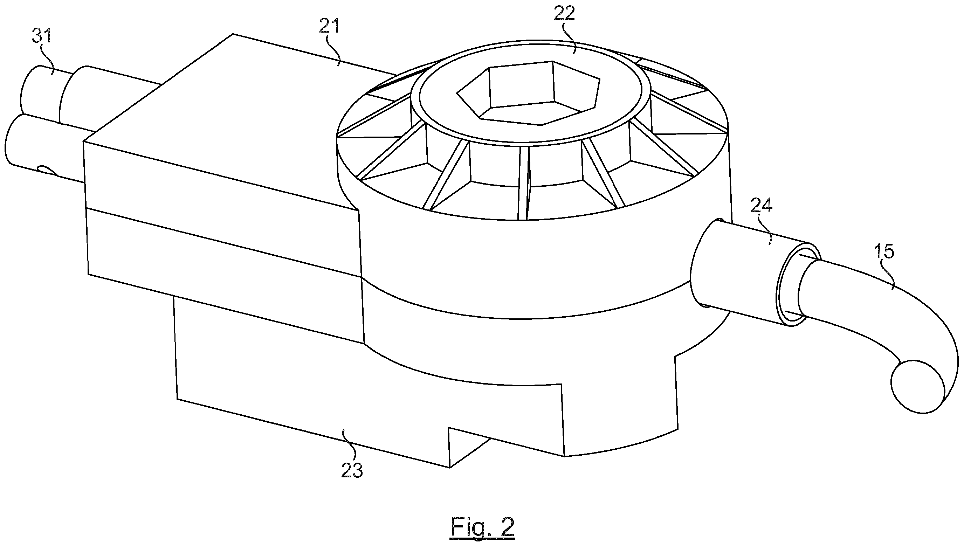

La figure 2 illustre un mode de réalisation du dispositif de bridage, ou de limitation de puissance, 11.

Il se présente sous la forme d'un boitier formé d'un couvercle haut 21 muni d'une molette de réglage 22 et d'un couvercle bas 23. Il porte un élément 24 de réception d'une des extrémités de la gaine 15, dont la position est réglable par rapport aux deux couvercles 21 et 23 formant le boîtier.

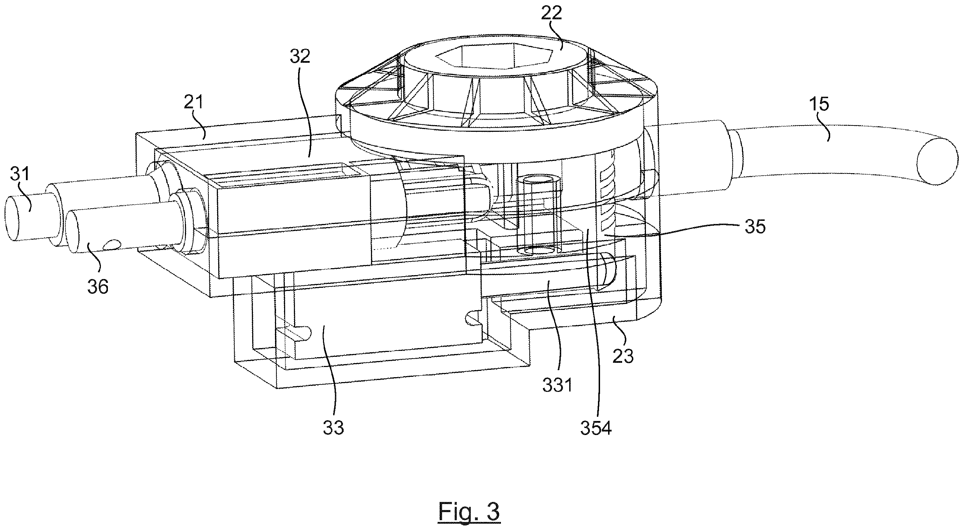

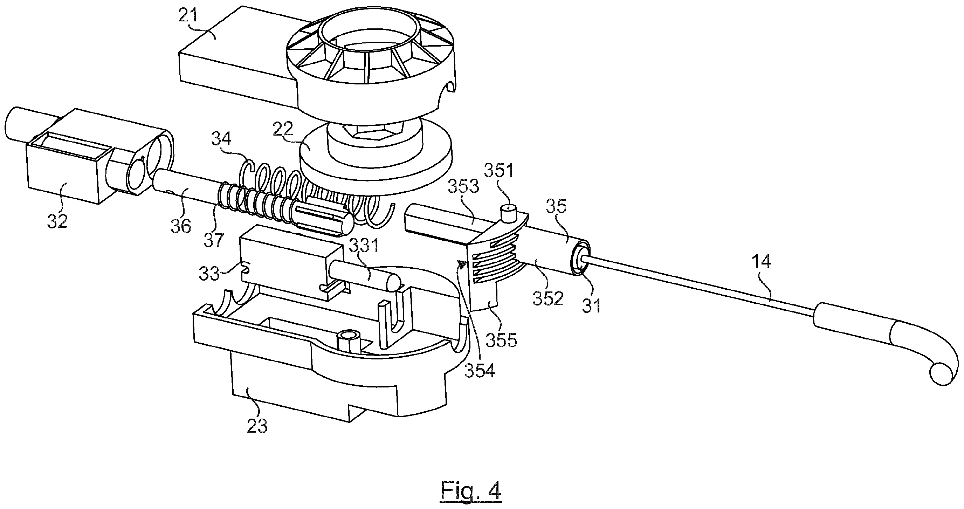

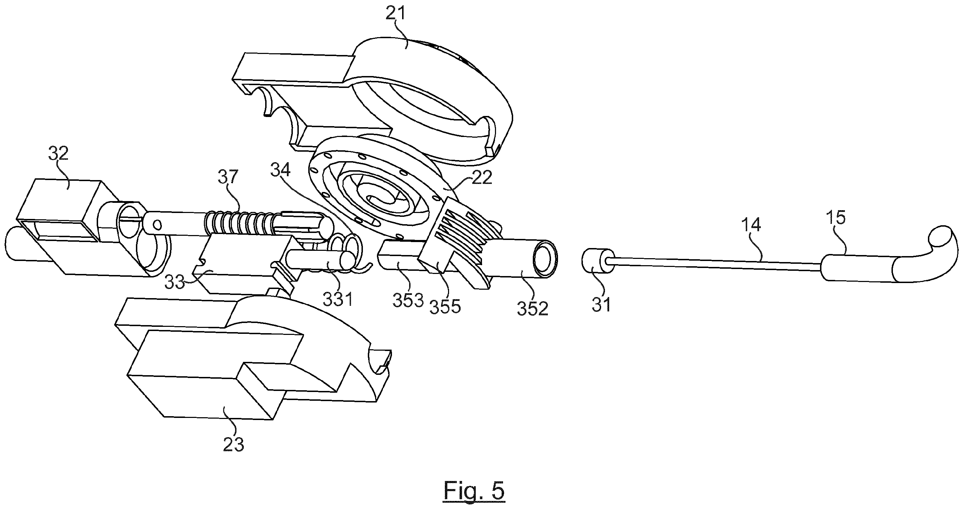

La figure 3 présente une vue dans laquelle le boîtier a été rendu transparent, et les figures 4 et 5 présentent deux vues en éclaté, selon des orientations différentes, du boîtier de la figure 1, laissant apparaître les composants internes du dispositif 11.

Le câble d'accélérateur 14 présente à son extrémité un embout de liaison 31, qui est solidarisé à un support de câble, ici un coulisseau 32. L'embout 31 vient en butée sur le coulisseau 32 (voir figure 2), qui est traversé par le câble.

La commande d'accélération (déplacement de la pédale 12) est transmise par le déplacement du câble 14 dans la gaine 15. Lorsque le câble 14 est tiré, à l'intérieur de la gaine 15, l'embout 31 est également tiré, et entraîne le déplacement du coulisseau 32 vers l'intérieur du boîtier. Un ressort 34 de rappel du câble, monté entre le coulisseau 32 et une butée 35 (dont la mise en oeuvre est discutée par la suite) se comprime, de façon à repousser le coulisseau 32 vers sa position de repos, lorsqu'on relâche la pédale, et donc la traction sur le câble.

Lorsque le pilote accélère, le coulisseau 32 est donc ramené vers l'intérieur du boîtier, et il entraîne simultanément une pièce 36 d'actionnement, ou de commande de gaz, reliée elle-même au volet d'accélérateur, par exemple par une tige (non représentée) autorisant un léger débattement si nécessaire.

En fin de course, la pièce 36 vient en contact avec la butée 35. Si le coulisseau 32 continue de pénétrer dans le boîtier, un ressort 37 monté sur la pièce 36 se comprime, mais cette pièce 36 ne se déplace plus. Le volet d'accélérateur 131 ne s'ouvre donc pas plus, même si l'on continue d'accélérer, c'est-à-dire d'appuyer sur la pédale. Il y a donc un découplage entre l'action sur la pédale 12 (dans la phase finale d'accélération) et le résultat en termes de puissance délivrée par le moteur 13.

Selon l'invention, la butée 35 peut être déplacée, à l'intérieur du boîtier. Ainsi, la course de la pièce 36 peut être modifiée, en fonction des besoins. En faisant varier la position de la butée, on augmente ou on réduit le déplacement maximum de la pièce 36, et donc le degré d'ouverture maximale du volet, et en conséquence la puissance maximale disponible. On dispose ainsi d'un système simple de bridage de la puissance.

Cependant, comme expliqué en préambule, cette approche est peu agréable pour le pilote, car le début du relâchement de la pédale d'accélérateur ne produit pas d'effet, lorsque la butée est dans une position de bridage.

Pour pallier ce problème, l'invention prévoit que la butée 35 reçoit, dans un logement 352, l'extrémité de la gaine 15, et est traversée par le câble 14. Ainsi, le réglage de la position de la butée 35 agit sur la position de l'extrémité de la gaine 15, et en conséquence sur la tension appliquée au câble 14 : lorsque la butée 35 est rapprochée du coulisseau 32 (c'est-à-dire que la puissance maximale disponible est réduite), le câble d'accélérateur est légèrement détendu, et inversement.

En d'autres termes, selon l'invention, la limitation de la puissance et la tension du câble sont couplés. On supprime ainsi, ou à tout le moins on réduit, l'absence d'effet du relâchement de la pédale, dans une position bridée, du fait que le câble a été détendu.

La position de la butée 35 peut être ajustée à l'aide d'une molette de réglage 22. Dans le mode de réalisation illustré, elle présente une forme hexagonale en creux, destinée à recevoir une clé de forme complémentaire, permettant à un opérateur d'effectuer les réglages souhaités. D'autres formes peuvent bien sûr être envisagées, le cas échéant plus complexes, pour garantir que seul un opérateur habilité peut agir sur le réglage.

La molette 22 entraîne en déplacement la butée 35. Ceci peut être assuré par la coopération entre un ergot 351 formé sur la butée, et une rainure de guidage 221 formée dans la molette (figure 5). Dans le mode de réalisation illustré, cette rainure 221 est en spirale, ce qui permet un réglage fin de la position de la butée 35, le déplacement de celle-ci correspondant à plusieurs tours de la molette.

Le fond de la rainure 221 peut présenter des creux, correspondant à une indexation des différentes positions possibles, et évitant que la butée ne se déplace en cours d'utilisation.

La butée 35 est donc une pièce mobile en translation dans le boîtier, comprenant une lumière permettant le passage du câble d'accélérateur 14, un logement de réception 352 de l'extrémité de la gaine 15, une portion 353 portant le ressort 34, et une surface de butée 354 coopérant avec l'extrémité de la pièce 36.

Dans ce mode de réalisation, la butée 35 comprend également une portion 355 venant en contact avec le doigt mobile 331 d'un potentiomètre linéaire 33, permettant de délivrer un signal électrique représentatif de la position de la butée 35. Ce signal électrique peut notamment servir à commander à distance un afficheur électronique indiquant l'état du bridage du moteur.

Selon une variante, la molette de réglage peut être motorisée, et le cas échéant pilotée à distance. Ceci peut par exemple permettre de régler simultanément une flotte de karts, et/ou d'agir sur un kart particulier, et par exemple réduire sa puissance disponible, notamment si son pilote a un comportement peu sûr et/ou dangereux.

Lorsque la molette de réglage 22 est déplacée en rotation, sa forme en spirale induit un mouvement de translation de l'ergot, et donc de la butée 35.

Si la molette de réglage 22 est déplacée de façon que la butée 35 se rapproche du coulisseau 32, le câble 14 se détend, l'extrémité de la gaine ayant simultanément été rapprochée (et la longueur de câble entre le coulisseau 32 et l'extrémité de la gaine étant en conséquence réduite). Dans le même temps, la plage d'ouverture du volet est réduite, la pièce 36 venant plus rapidement en contact avec la butée 35.

Afin de décrire le fonctionnement du système de limitation de la puissance motrice du kart, on considère tout d'abord que la butée 35 est dans une position non bridée : la butée 35 est éloignée au maximum du coulisseau 32, et la pièce 36 vient en contact avec la butée 35 dans une position dans laquelle elle autorise une ouverture maximale du volet 131 (ou ne vient pas en contact avec la butée). La tension du câble d'accélérateur 14 est par exemple réglée pour avoir un ressenti souhaitable dans cette position.

Afin de limiter la puissance du kart (fonction de bridage), on déplace la butée 35 à l'aide de la molette de réglage 22 de façon qu'elle soit plus proche du coulisseau 32. La distance entre la pièce 36 et la butée 35 est également raccourcie. Lorsque le pilote actionne la pédale 12 ou la manette d'accélération et agit ainsi sur le câble d'accélérateur, le coulisseau 32 se rapproche de la butée 35, jusqu'à la mise en butée de la pièce 36. Lorsque celle-ci entre en butée, son mouvement de translation est bloqué, ce qui a pour effet de limiter l'ouverture du volet, même si le pilote continue à accélérer. Plus la butée 35 est placée proche du coulisseau 32, plus la mise en butée de la pièce 36 intervient tôt lors de l'actionnement de la pédale/manette d'accélération, limitant d'autant plus l'ouverture du volet.

Une fois que la pièce 36 est entrée en butée, le pilote peut éventuellement continuer à appuyer sur la pédale/manette d'accélération, mais ceci n'a pas d'effet supplémentaire sur l'ouverture du volet. Le coulisseau 32 peut continuer à coulisser le long de la pièce 36, à l'intérieur du boîtier, comprimant les ressorts 34 et 37, mais la pièce 36 reste immobile.

Cependant, comme expliqué précédemment, la possibilité pour le pilote de continuer à appuyer sur la pédale/manette d'accélération après la mise en butée de la pièce 36 implique que le kart ne décélérera pas dès le début du retour de la pédale/manette d'accélération, si la butée n'agit que sur cette pièce 36. En effet, la décélération ne commence que lorsque les ressorts 34, 37 sont détendus et que la pièce 36 n'est plus en butée.

Pour pallier cet inconvénient, l'invention prévoit que les moyens 352 de réception de l'extrémité de la gaine 15 sont solidaires (ou font partie) de la butée 35. Comme indiqué précédemment, le câble 14 se détend à mesure que la distance entre le coulisseau 32 et la butée 35 diminue.

L'absence de réaction, plus précisément de décélération, lorsque le pilote commence à relâcher la pédale ou la manette, est donc supprimée, ou à tout le moins réduite.

Il est à noter que la mise en oeuvre de l'invention peut être effectuée de nombreuses autres façons, dès lors que les deux fonctions, limitation de la puissance et tension du câble sont couplés. Les différents éléments peuvent prendre des formes différentes. En particulier, la molette peut être remplacée par exemple par une pièce mobile en translation, par exemple le long d'une crémaillère.

Par ailleurs, l'actionnement manuel de cette molette peut être remplacé par une commande motorisée, pilotable à distance. Ceci permet par exemple à un responsable de piste de paramétrer simultanément une pluralité de karts qui vont prendre le départ, en une seule opération. Ceci peut également permettre d'agir à distance, et de limiter la puissance d'un kart en déplacement, par exemple si son pilote a un comportement dangereux ou inadapté.

## Revendications

1. Kart à moteur thermique, mettant en oeuvre un volet d'accélérateur dont l'ouverture est pilotée par le déplacement d'un actionneur (12), via un câble d'accélérateur (14),
ledit kart comprenant des moyens de bridage (11), contrôlant une ouverture maximale dudit volet d'accélérateur (131) en fonction d'un réglage sélectionné, de façon à contrôler la puissance maximale disponible dudit moteur (13),
**caractérisé en ce que** lesdits moyens de bridage (11) contrôlent simultanément la tension dudit câble d'accélérateur (14), de façon que ladite tension soit réduite lorsque ladite ouverture maximale du volet (131) est réduite, et réciproquement.

2. Kart selon la revendication 1, **caractérisé en ce que** ledit câble d'accélérateur (14) circule, sur une portion de sa longueur, dans une gaine (15), et **en ce que** lesdits moyens de bridage (11) agissent sur la position de l'une des extrémités de ladite gaine (15).

3. Kart selon l'une quelconque des revendications 1 et 2, **caractérisé en ce que** lesdits moyens de bridage (11) comprennent un boîtier (21, 23) recevant ledit câble d'accélérateur (14) et présentant un élément de réglage (17, 22), pouvant prendre au moins deux positions correspondant chacune à un niveau de bridage prédéfini.

4. Kart selon la revendication 3, **caractérisé en ce que** ledit boîtier (21, 23) contient, mobile en translation, un support de câble (32), relié à une extrémité dudit câble d'accélérateur (14) et portant un élément d'actionnement (36) dudit volet d'accélérateur (131).

5. Kart selon la revendication 2 et l'une quelconque des revendications 3 et 4, **caractérisé en ce que** ledit boîtier (21, 23) contient une butée (35) mobile en translation, portant un logement de réception (352) de ladite extrémité de ladite gaine (15).

6. Kart selon les revendications 4 et 5, **caractérisé en ce que** ladite butée (35) reçoit en appui ledit élément d'actionnement (16, 36) du volet d'accélérateur (131).

7. Kart selon l'une quelconque des revendications 5 à 6, **caractérisé en ce que** ledit câble d'accélérateur (14) porte un ressort de rappel (34) du câble (14), monté entre ledit support de câble (32) et ladite butée (35), et **en ce que** ledit élément d'actionnement (16, 36) porte un ressort de rappel (37) de la commande du volet (131).

8. Kart selon l'une quelconque des revendications 3 à 7, **caractérisé en ce que** ledit élément de réglage (17, 22) est mobile en rotation.

9. Kart selon les revendications 5 et 8, **caractérisé en ce que** ledit élément de réglage (17, 22) porte une rainure (221) coopérant avec un ergot (351) formé de ladite butée (35).

10. Kart selon la revendication 9, **caractérisé en ce que** ladite rainure (221) est en spirale.

11. Kart selon l'une quelconque des revendications 9 et 10, **caractérisé en ce que** le fond de ladite rainure (221) porte au moins deux creux de maintien dudit ergot (351), chacun desdits creux correspondant à l'un des niveaux de bridage prédéfinis.

12. Kart selon l'une quelconque des revendications 1 à 11, **caractérisé en ce que** le réglage desdits moyens de bridage (11) est actionné par un moteur.

13. Kart selon la revendication 12, **caractérisé en ce qu'**il comprend des moyens de réception d'au moins un signal de commande, pilotant à distance ledit moteur et/ou d'émission d'un signal d'information, indiquant la position des moyens de bridage (11).

14. Dispositif de bridage pour un kart à moteur thermique mettant en oeuvre un volet d'accélérateur (131) dont l'ouverture est pilotée par le déplacement d'un actionneur (36), via un câble d'accélérateur,
comprenant des moyens de bridage (11) contrôlant une ouverture maximale dudit volet d'accélérateur (131) en fonction d'un réglage sélectionné, de façon à contrôler la puissance maximale disponible dudit moteur (13),
**caractérisé en ce que** lesdits moyens de bridage (11) contrôlent simultanément la tension dudit câble d'accélérateur (14), de façon que ladite tension soit réduite lorsque ladite ouverture maximale du volet (131) est réduite, et réciproquement.

## Patentansprüche

1. Kart mit Verbrennungsmotor, der eine Gasklappe verwendet, deren Öffnung durch Bewegen eines Stellglieds (12) über ein Gasseil (14) gesteuert wird,
wobei der Kart Drosselmittel (11) umfasst, die eine maximale Öffnung der Gasklappe (131) entsprechend einer gewählten Regelung steuern, so dass die vom Motor (13) verfügbare Höchstleistung gesteuert wird,
**dadurch gekennzeichnet, dass** die Drosselmittel (11) gleichzeitig die Spannung des Gasseils (14) steuern, so dass die Spannung verringert wird, wenn sich die maximale Öffnung der Klappe (131) verringert, und umgekehrt.

2. Kart nach Anspruch 1, **dadurch gekennzeichnet, dass** das Gasseil (14) in einem Teil seiner Länge in einer Hülle (15) läuft und dass die Drosselmittel (11) auf die Position von einem der Enden der Hülse (15) einwirken.

3. Kart nach Anspruch 1 oder 2, **dadurch gekennzeichnet, dass** die Drosselmittel (11) ein Gehäuse (21, 23) zur Aufnahme des Gasseils (14) umfassen, das ein Regelelement (17, 22) aufweist, das wenigstens zwei Positionen entsprechend jeweils einem vordefinierten Drosselniveau einnehmen kann.

4. Kart nach Anspruch 3, **dadurch gekennzeichnet, dass** das Gehäuse (21, 23) einen verschiebbar beweglichen Kabelhalter (32) enthält, der mit einem Ende des Gasseils (14) verbunden ist und ein Betätigungselement (36) der Gasklappe (131) trägt.

5. Kart nach Anspruch 2 und nach Anspruch 3 oder 4, **dadurch gekennzeichnet, dass** das Gehäuse (21, 23) einen verschiebbar beweglichen Anschlag (35) enthält, der eine Aufnahme (352) des Endes der Hülse (15) trägt.

6. Kart nach Anspruch 4 und 5, **dadurch gekennzeichnet, dass** der Anschlag (35) das Betätigungselement (16, 36) der Gasklappe (131) stützend aufnimmt.

7. Kart nach Anspruch 5 oder 6, **dadurch gekennzeichnet, dass** das Gasseil (14) eine Rückholfeder (34) des Seils (14) trägt, die zwischen dem Seilhalter (32) und dem Anschlag (35) montiert ist, und dass das Betätigungselement (16, 36) eine Rückholfeder (37) der Bedienung der Klappe (131) trägt.

8. Kart nach einem der Ansprüche 3 bis 7, **dadurch gekennzeichnet, dass** das Regelelement (17, 22) drehbar beweglich ist.

9. Kart nach Anspruch 5 und 8, **dadurch gekennzeichnet, dass** das Regelelement (17, 22) eine mit einem vom Anschlag (35) gebildeten Sporn (351) zusammenwirkende Nut (221) trägt.

10. Kart nach Anspruch 9, **dadurch gekennzeichnet, dass** die Nut (221) spiralförmig ist.

11. Kart nach Anspruch 9 oder 10, **dadurch gekennzeichnet, dass** der Boden der Nut (221) wenigstens zwei Vertiefungen zum Halten des Sporns (351) trägt, wobei jede der Vertiefungen einem der vordefinierten Drosselniveaus entspricht.

12. Kart nach einem der Ansprüche 1 bis 11, **dadurch gekennzeichnet, dass** die Regelung der Drosselmittel (11) von einem Motor betätigt wird.

13. Kart nach Anspruch 12, **dadurch gekennzeichnet, dass** er Mittel zum Empfangen von wenigstens einem Befehlssignal zur Fernsteuerung des Motors und/oder zum Ausgeben eines Informationssignals zur Angabe der Position der Drosselmittel (11) umfasst.

14. Drosselvorrichtung für einen Kart mit Verbrennungsmotor, der eine Gasklappe (131) verwendet, deren Öffnung durch Bewegen eines Stellglieds (36) über ein Gasseil gesteuert wird,
umfassend Drosselmittel (11), die eine maximale Öffnung der Gasklappe (131) entsprechend einer gewählten Regelung steuern, so dass die vom Motor (13) verfügbare Höchstleistung gesteuert wird,
**dadurch gekennzeichnet, dass** die Drosselmittel (11) gleichzeitig die Spannung des Gasseils (14) steuern, so dass die Spannung verringert wird, wenn sich die maximale Öffnung der Klappe (131) verringert, und umgekehrt.

## Claims

1. Kart with a combustion engine, implementing an accelerator element of which the opening is controlled by the movement of an actuator (12), via an accelerator cable (14), said kart comprising clamping means (11), controlling a maximum opening of said accelerator element (131) in accordance with a selected adjustment, so as to control the maximum available power of said engine (13), **characterised in that** said clamping means (11) simultaneously control the tension of said accelerator cable (14), such that said tension is reduced when said maximum opening of the element (131) is reduced, and conversely.

2. Kart according to Claim 1, **characterised in that** said accelerator cable (14) circulates, over a portion of the length thereof, in a sheath (15), and **in that** said clamping means (11) act on the position of one of the ends of said sheath (15).

3. Kart according to any one of Claims 1 and 2, **characterised in that** said clamping means (11) comprise a casing (21, 23) receiving said accelerator cable (14) and having an adjustment element (17, 22), which could take at least two positions, each one corresponding to a predefined clamping level.

4. Kart according to Claim 3, **characterised in that** said casing (21, 23) contains, mobile in translation, a cable support (32), connected to an end of said accelerator cable (14) and supporting an actuation element (36) of said accelerator element (131).

5. Kart according to Claim 2 and any one of Claims 3 and 4, **characterised in that** said casing (21, 23) contains an abutment (35), mobile in translation, supporting a receiving housing (352) of said end of said sheath (15).

6. Kart according to Claims 4 and 5, **characterised in that** said abutment (35) receives said actuation element (16, 36) supporting the accelerator element (131).

7. Kart according to any one of Claims 5 to 6, **characterised in that** said accelerator cable (14) supports a counter spring (34) of the cable (14), mounted between said cable support (32) and said abutment (35), and **in that** said actuation element (16, 36) supports a counter spring (37) of the control of the element (131).

8. Kart according to any one of Claims 3 to 7, **characterised in that** said adjustment element (17, 22) is mobile in rotation.

9. Kart according to Claims 5 and 8, **characterised in that** said adjustment element (17, 22) supports a groove (221) cooperating with a lug (351) formed from said abutment (35).

10. Kart according to Claim 9, **characterised in that** said groove (221) is spiral-shaped.

11. Kart according to any one of Claims 9 and 10, **characterised in that** the bottom of said groove (221) supports at least two cavities for holding said lug (351), each one of said cavities corresponding to one of the predefined clamping levels.

12. Kart according to any one of Claims 1 to 11, **characterised in that** the adjustment of said clamping means (11) is actuated by an engine.

13. Kart according to Claim 12, **characterised in that** it comprises means for receiving at least one control signal, remotely controlling said engine and/or emitting an information signal, indicating the position of the clamping means (11).

14. Clamping device for a kart with a combustion engine implementing an accelerator element (131) of which the opening is controlled by the movement of an actuator (36), via an accelerator cable, comprising clamping means (11) controlling a maximum opening of said accelerator element (131) in accordance with a selected adjustment, so as to control the maximum available power of said engine (13), **characterised in that** said clamping means (11) simultaneously control the tension of said accelerator cable (14), such that said tension is reduced when said maximum opening of the element (131) is reduced, and conversely.
